# EUROPÄISCHE PATENTANMELDUNG

(11) **EP 3 955 606 A1**
(43) Veröffentlichungstag der Anmeldung: **16.02.2022**
(21) Anmeldenummer: 20190425.7
(22) Anmeldetag: 11.08.2020
(51) Int. Cl.: H04W 4/70, G06F 1/12, H04W 12/037, H04W 12/069, H04W 56/00

(54) **VERFAHREN UND VORRICHTUNG ZUM BESTÄTIGEN EINER ÜBEREINSTIMMENDEN ZEITINFORMATION IN MEHREREN KOMPONENTEN INNERHALB EINER VORGEBBAREN KOMPONENTENGRUPPE**

(71) Anmelder: Siemens Aktiengesellschaft, 80333 München (DE)
(72) Erfinder: Falk, Rainer, 85586 Poing (DE); Feist, Christian Peter, 80689 München (DE); Fries, Steffen, 85598 Baldham (DE); Pfau, Axel, 80333 München (DE); Pyka, Stefan, 85570 Markt Schwaben (DE); Schneider, Daniel, 80796 München (DE); Sperl, Franz, 92526 Oberviechtach (DE)

(57) **Zusammenfassung**

Die Erfindung beansprucht ein Verfahren zum Bestätigen einer identisch oder annähernd übereinstimmenden Zeitinformation in mehreren Komponenten (FD1, FD2, FD4) innerhalb einer vorgebbaren Komponentengruppe, deren Komponenten untereinander zeitsynchronisiert jeweils wenigstens eine Aufgabe ausführen sollen, aufweisend folgende Schritte:
- Überprüfen, ob eine angegebene Zeitinformation der Komponenten mit der von einer Referenzzeitquelle gelieferten Zeitinformation identisch oder annähernd innerhalb eines vorgebbaren Toleranzbereiches übereinstimmen,
- Bereitstellen einer kryptographisch geschützten Zeitsynchronisations-Bestätigung abhängig vom Überprüfungsergebnis, und
- Zulassen der Ausführung der wenigstens einen Aufgabe erst nach der Bereitstellung der kryptographisch geschützten Zeitsynchronisations-Bestätigung.

## Beschreibung

Die Erfindung betrifft ein Verfahren und eine Vorrichtung zum Bestätigen einer übereinstimmenden Zeitinformation in mehreren Komponenten, sowie ein zugehöriges Computerprogrammprodukt.

Da industrielle Systeme (Steuergeräte, Feldgeräte, Industrie PCs, IoT- und Edge-Geräte, Cloud-Server, Aktoren, Sensoren) oft über einen langen Zeitraum im Feld verwendet werden, sind sie sich ständig ändernden Voraussetzungen und einem dynamischen Umfeld ausgesetzt. Industrielle System, vor allem Automatisierungsanlagen, umfassen mehrere Komponenten, die Maschinen und/oder Geräte, z.B. IoT-Geräte, oder auch Komponenten innerhalb eines solchen Geräts umfassen können.

Eine definierte oder vorgebbare Gruppe von (IoT-)Geräten benötigt in einem industriellen Umfeld für verschiedene Operationen eine synchronisierte Zeitinformation. Beispiele hierfür sind die
- Synchronisation rotierender Teile, die aufeinander abgestimmt sein müssen, z.B. die Walzen in einer Zeitungsdruckerei, um die Spannung des Papiers auf einem Optimum zu halten, damit es nicht reißt oder durchhängt.
- Synchronisation der Zeit bzgl. Logging-Meldungen verschiedener Teile eines Systems. Die Synchronisation hilft hier, im Fehlerfall die einzelnen Nachrichten der Subsysteme in eine zeitliche Reihenfolge bringen zu können, um damit die Ursache des Fehlerfalls rekonstruieren zu können.
- Synchronisation der Zeit zur Validierung von Authentisierungsinformationen. IoT-Geräte benutzen zunehmend digitale Zertifikate (X.509 Zertifikate und korrespondierende private Schlüssel), um sich in der Infrastruktur, gegenüber anderen Kommunikationspartnern oder auch (Cloud-) Diensten zu authentisieren. Diese Zertifikate haben eine Gültigkeitsdauer, die während der Validierung der Zertifikate überprüft wird.

Zur Synchronisation der Zeitinformationen sind beispielsweise folgende Verfahren möglich:
- Network Time Protokoll - NTP (IETF RFC 5905) beschreibt die Synchronisation mit einem zentralen Server. Typischerweise ist die Adresse des Zeit-Servers vorkonfiguriert, so dass ein Gerät die aktuelle Zeit erfragen kann.
   (https://de.wikipedia.org/wiki/Network_Time_Protocol). Mit Network Time Security wird derzeit ein kryptographischer Schutz für den Austausch von Zeitsynchronisierungsinformationen für NTP definiert.
- Precision Time Protocol - PTP (IEEE 1588) nutzt eine zentrale Uhr. Anders als beim Network Time Protocol (NTP) strebt PTP höhere Genauigkeit in lokal begrenzten Netzen an. Damit ist in Hardware-Ausführung eine Genauigkeit von Nanosekunden und als Software unter einer Mikrosekunde möglich.
   (https://de.wikipedia.org/wiki/Precision_Time_Protocol). Es ist möglich, dass PTP auch eine Security Option unterstützt, die einen kryptographischen Schutz der Synchronisierungsnachrichten ermöglicht.

Aus EP 3 425 845 A1 ist ein digitaler Zeitstempeldienst basierend auf dem Roughtime Protokoll bekannt, der einen verteilten digitalen Notar realisiert. Hierbei werden die Zeitstempel von verschiedenen Notarservern nacheinander an ein Dokument gehängt, die vom Empfänger entsprechend überprüft werden können.

Es wird eine Möglichkeit innerhalb einer Komponentengruppe benötigt, um Abweichungen der lokalen Zeitinformation einer Komponente mit einer Zeitinformation zumindest einer anderen Komponente zu erkennen, wenn letztere Zeitinformation zentral oder lokal zur Verfügung steht oder gestellt wird.

Der Erfindung liegt daher die Aufgabe zugrunde, ein Verfahren und eine Vorrichtung derart auszugestalten, dass gegenüber dem eingangs genannten Stand der Technik ein verlässlicher zeitsynchronisierter Betrieb solcher Komponenten innerhalb einer vorgebbaren Komponentengruppe ermöglicht wird.

Diese Aufgabe wird durch die Merkmale gemäß den unabhängigen Patentansprüchen gelöst. Vorteilhafte Ausführungsformen der vorliegenden Erfindung sind in den abhängigen Ansprüchen beschrieben.

Die Erfindung beansprucht ein Verfahren zum Bestätigen einer identisch oder annähernd übereinstimmenden (System-)Zeitinformation in mehreren Komponenten innerhalb einer vorgebbaren Komponentengruppe, deren Komponenten untereinander zeitsynchronisiert jeweils wenigstens eine Aufgabe bzw. Funktion ausführen sollen, aufweisend folgende Schritte:
- Überprüfen, ob eine angegebene Zeitinformation der Komponenten mit der von einer Referenzzeitquelle gelieferten Zeitinformation identisch oder annähernd innerhalb eines vorgebbaren Toleranzbereiches übereinstimmt,
- Bereitstellen einer kryptographisch geschützten Zeitsynchronisations-Bestätigung abhängig vom Überprüfungsergebnis, und
- Zulassen der Ausführung der wenigstens einen Aufgabe erst nach der Bereitstellung der kryptographisch geschützten Zeitsynchronisations-Bestätigung.

Die Zeitsynchronisations-Bestätigung kann eine Gültigkeitsdauer umfassen. Bei Fehlen der kryptographisch geschützten Zeitsynchronisations-Bestätigung innerhalb einer vorgebbaren Zeitdauer und/oder Ablauf der Gültigkeitsdauer kann die Ausführung der wenigstens einen Aufgabe abgelehnt oder nicht freigegeben werden.

In einem (verteilten) System, das eine Komponentengruppe definiert oder vorgeben kann, kann somit überprüft werden, ob (IoT-)Komponenten der Komponentengruppe korrekt synchronisiert sind. Es kann überprüft werden, ob eine einzelne Komponente hinreichend genau mit einer Referenzzeitquelle synchronisiert ist oder ob mehrere Komponenten untereinander hinreichend genau synchronisiert sind. Nur wenn dies tatsächlich der Fall ist, wird dies der Fall ist, d.h. eine aktuelle und gültige kryptographisch geschützten Zeitsynchronisations-Bestätigung vorliegt, wird eine Aufgabe, z.B. eine Steuerungsfunktion oder Regelungsfunktion, ausgeführt. Dadurch kann verlässlich verhindert werden, dass die Aufgabe unzuverlässig oder fehlerhaft ausgeführt wird. Dies ist besonders vorteilhaft, wenn für die Zeitsynchronisation Übertragungswege wie z.B. eine Drahtlosübertragung, verwendet werden, die gestört werden können (z.B. durch Kamming, Überlastung).
Dabei muss die Zeitinformation nicht der Realzeit entsprechend. Es ist oftmals ausreichend, über eine unabhängige Zeitinformation die Synchronität untereinander festzustellen. Es wird eine kryptographisch geschützte Zeitsynchronisations-Bestätigung (Assertion) ausgestellt, die zusichert, dass ein oder mehrere Komponenten hinreichend genau synchronisiert sind. Hierbei sollen die von der Komponente angegebene Zeitinformation und die Zeitinformation der Referenzquelle identische oder annähernd übereinstimmen bzw. ähnlich sein. Vorzugsweise wird spezifiziert, wie genau die Zeit synchronisiert ist (Versatz, Jitter), vorzugsweise für ein oder mehrere Toleranzbereiche (z.B. 95%, 99%, 99,9%).

Hierzu wird überprüft, ob eine angegebene Zeitinformation der Komponenten mit der von einer Referenzzeitquelle gelieferten Zeitinformation identisch oder annähernd innerhalb des vorgebenen Toleranzbereiches übereinstimmt.
Eine Zeitsynchronisations-Bestätigung kann von einer Referenzquelle für die Zeitinformation für eine vorgegebene Kompnentengruppe ausgestellt werden. Wenn die Komponenten untereinander hinreichend synchronisiert sein sollen, kann die Zeitsynchronisations-Bestätigung von einer anderen ausstellende Stelle bereitgestellt werden als der Referenzquelle, die diese Zeitsynchronisations-Bestätigung normalerweise ausstellen würde. Dies ist insbesonderen dann sinnvoll, wenn die Referenzquelle und die ausstellende Stelle getrennt voneinander z.B. an unterschiedlichen Orten oder in unterschiedlichen Domänen angeordnet sind oder aber die Zeitsynchronisations-Bestätigung unabhängig von einer zentralen Zeit gegeben werden soll.

Zumindest eine Komponente der Gruppe kann eine Anforderungsnachricht für die Bereitstellung einer solchen Zeitsynchronisations-Bestätigung an die Referenzzeitquelle und/oder an die die Zeitsynchronisations-Bestätigung ausstellende senden. Die Anforderungsnachricht kann hierbei eine Liste von Identifikationsinformationen und/oder Adressen von denjenigen Komponenten umfassen, die für die Zeitsynchronisations-Bestätigung berücksichtigt werden sollen und für die Ausführung der wenigstens einen Aufgabe benötigt werden.

Die Zeitsynchronisations-Bestätigung kann als Teil einer Authentisierungs- und Schlüsselvereinbarung (TLS, IKEv2, etc.) übertragen werden. Der kryptographische Schutz einer Zeitsynchronisations-Bestätigung kann ggf. zusätzlich durch eine digitale Signatur (z.B. mittels Verfahren wie RSA oder ECDSA) realisiert werden. Der kryptographische Schutz der Zeitsynchronisations-Bestätigung bringt den Vorteil mit sich, dass die Zeitsynchronisations-Bestätigung nicht (von außen) manipuliert werden kann. Eine Manipulation könnte zu Schäden im Automatisierungssystem bzw. deren Komponenten führen.

Wenn mehrere Komponenten untereinander hinreichend genau synchronisiert sein sollen, dann kann der kryptographische Schutz auch durch eine digitale Gruppensignatur realisiert werden.

Ein weiterer Aspekt der Erfindung ist eine Vorrichtung zum Bestätigen einer identisch oder annähernd übereinstimmenden Zeitinformation in mehreren Komponenten innerhalb einer vorgebbaren Komponentengruppe, deren Komponenten untereinander zeitsynchronisiert jeweils wenigstens eine Aufgabe ausführen sollen, aufweisend:
- eine Überprüfungseinheit, die dazu eingerichtet ist, zu überprüfen, ob eine angegebene Zeitinformation der Komponenten mit der von einer Referenzzeitquelle gelieferten Zeitinformation identisch oder annähernd innerhalb eines vorgebbaren Toleranzbereiches übereinstimmt,
- ein Bereitstellungseinheit, die dazu eingerichtet ist, eine kryptographisch geschützte Zeitsynchronisations-Bestätigung abhängig vom Überprüfungsergebnis bereitzustellen.

Diese Vorrichtung kann entweder die Referenzquelle darstellen, die dann auch die geschützte Zeitsynchronisations-Bestätigung bereitstellt, oder eine andere, eine Zeitsynchronisations-Bestätigung ausstellende Stelle sein, die vorzugsweise innerhalb des oben erwähnten verteilten Systems angeordnet ist. Referenzquelle und ausstellende Stelle können auch in einer Vorrichtung integriert sein.

Ein weiterer Aspekt der Erfindung ist eine Komponente innerhalb einer Komponentengruppe geeignet zum Ausführen einer mit wenigstens einer anderen Komponente der Komponentengruppe untereinander zeitsynchronisierten Aufgabe, aufweisend:
- eine Sendeeinheit zum Senden einer Anforderungsnachricht für die Bereitstellung einer Zeitsynchronisations-Bestätigung,
- eine Empfangseinheit zum Empfang der bereitgestellten Zeitsynchronisations-Bestätigung und
- eine Zulassungseinheit, die dazu eingerichtet ist, die Ausführung der wenigstens einen Aufgabe nach Empfang der kryptographisch geschützten Zeitsynchronisations-Bestätigung zuzulassen oder bei Fehlen der kryptographisch geschützten Zeitsynchronisations-Bestätigung innerhalb einer vorgebbaren Zeitdauer und/oder Ablauf der Gültigkeitsdauer der kryptographisch geschützten Zeitsynchronisations-Bestätigung abzulehnen.

Zudem kann sie dazu eingerichtet sein, eine die Zeitsynchronisations-Bestätigung ausstellende Stelle festzulegen. Dies kann eine andere Komponente, ein innerhalb oder außerhalb der Komponentengruppe angeordneter Server und/oder auch die Referenzquelle sein.

Ein weiterer Aspekt der Erfindung ist eine Anordnung umfassend eine solche Vorrichtung und mindestens eine solche Komponente. Die Anordnung kann das oben erwähnte verteilte System sein.

Des Weiteren wird ein Computerprogrammprodukt umfassend ein nichtflüchtiges Speichermedium, auf dem ein ladbarer und ausführbarer Programmcode gespeichert ist, welches das Verfahren nach einem der oben genannten Ausführungsformen in einer Prozessoreinheit insbesondere einer Vorrichtung nach einer der vorhergehend beschriebenen Ausführungsformen ausführt.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die Ausführungsumgebung erstellt werden kann.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die Ausführungsumgebung erstellt werden kann.

Die Vorrichtung, die Anordnungen, Einrichtungen, Einheiten bzw. Geräte, Module und Computerprogramm(produkte) bzw. Komponenten können entsprechend der Weiterbildungen/Ausführungsformen des vorgenannten Verfahrens und deren Weiterbildungen/Ausführungsformen ausgebildet sein.

Eine Ausführungsform der Erfindung sieht vor, dass eine Einheit bzw. Komponente, insbesondere eine Kommunikationseinheit bzw. Netzwerkkomponente, als eine Hardware-Komponente ausgebildet ist. Eine Einheit bzw. Komponente kann einen Prozessor umfassen. Subeinheiten einer größeren Einheit bzw. Hardware-komponente können in Software, Firmware bzw. wiederum in Hardware implementiert sein.

Bei einem Prozessor bzw. einer Prozessoreinheit kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

### Ausführungsbeispiele der Erfindung

Ausführungsbeispiele des erfindungsgemäßen Verfahrens und der Übertragungsvorrichtung sind in den Zeichnungen beispielhaft dargestellt und werden anhand der nachfolgenden Beschreibung näher erläutert. Es zeigt:

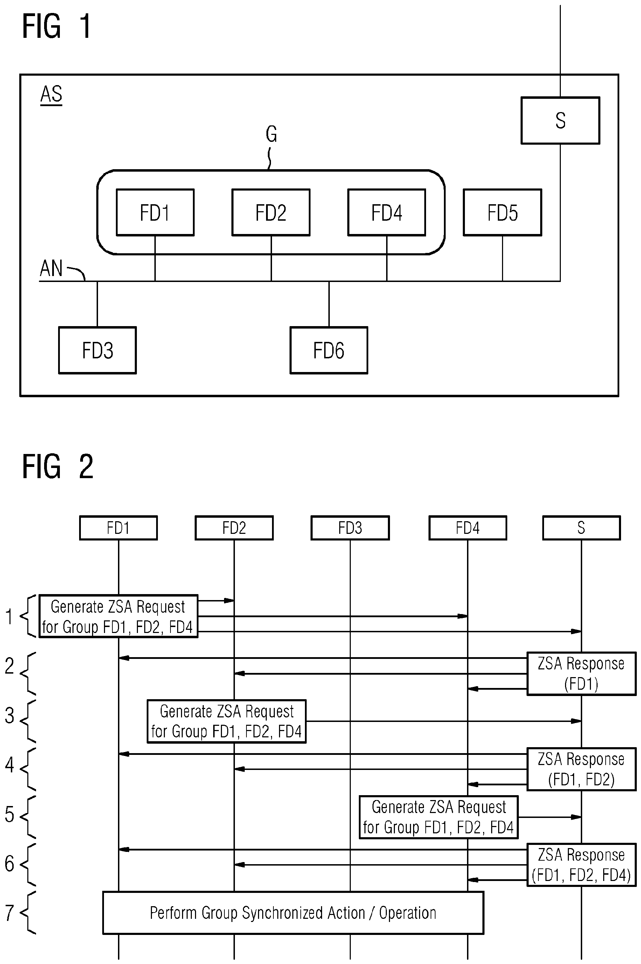

Die Figur 1 zeigt beispielhaft in einem industriellem Umfeld ein Automatisierungssystem bzw. eine Automatisierungsanlage, welche ein Netzwerk AN aufweist, über das die Komponenten des Automatisierungssystems FD1 bis FD 6 miteinander verbunden sind. Komponenten können - wie schon eingangs erwähnt - (IoT-)Geräte, Maschinen, etc. sein. Dabei bilden die Komponenten FD1, FD2 und FD4 eine Komponentengruppe G. Diese Komponenten der Komponentengruppe sollen untereinander zeitsynchronisiert jeweils wenigstens eine Aufgabe ausführen. Eine solche Aufgaben könnten die eingangs bereits erläuterten Aufgaben sein. Beispielsweise müßten rotierende Teile bzw. Komponenten aufeinander abgestimmt sein, z.B. die Walzen in einer Zeitungsdruckerei. Zudem ist ein Synchronisationsserver S mit dem Netzwerk AN verbunden. Das Netzwerk AN kann drahtgebunden oder drahtlos ausgebildet sein. Bei der drahtlosen Variante können gängige oder künftige Funktechniken wie WIFI, WiMax, Bluetooth, 2G, 3G, 4G, 5G und weitere verwendet werden. Der Synchronisationsserver S kann innerhalb des Automatisierungssystems oder außerhalb des Synchronisationssystems angeordnet sein und mit einer Referenzzeitquelle verbunden bzw. gekoppelt sein, wenn die Referenzzeitquelle nicht in den Synchronisationsserver S integriert ist. Im Synchronisationsserver S kann eine nicht dargestellte Überprüfungseinheit und Bereitstellungseinheit umfassen. Jede Komponente weist jeweils eine nicht dargestellte Sende-, Empfangs- und Zulassungseinheit auf. Es ist auch denkbar, dass die Referenzquelle in den Synchronisationsserver S integriert ist. Ebenso ist denkbar, dass die Synchronisationsserverfunktionalität in jeder Komponente integriert ist. Über ein Verfahren zur Bestimmung eines Masters in einer Kommunikationsgruppe, wie z.B aus PTP bekannt (oder per würfeln), kann dann der Master in der Gruppe bestimmt werden, z.B. FD4, der die Zeitsynchronisations-Bestätigung ausstellt. Komponente FD4 würde dann die nichtdargestellte Überprüfungseinheit und Bereitstellungseinheit umfassen.

In der Figur 2 wird beispielhaft ein Ablaufdiagramm gezeigt für den Fall eines gruppenexternen Synchronisationsserver S.

Hierbei sendet beispielsweise in Schritt 1 die Sendeeinheit der Komponente FD1 eine Anforderungsnachricht an die Komponenten FD2 und FD4 der Komponentengruppe und an den Server S, der hier im Beispiel eine Zeitsynchronisations-Bestätigung ausstellende Stelle darstellt. Jede der Komponenten führt eine Synchronisation mit einem ausgezeichneten Server (Referenzquelle) (NTP Server, PTP General Master Clock) durch und meldet die lokal synchronisierte Zeitinformation über eine Anforderungsnachricht an den zentralen Server S. Daraufhin überprüft in Schritt 2 die Überprüfungseinheit des Servers, die in der Anforderungsnachricht angegebenen Zeitinformation mit der von der Referenzquelle stammenden Zeitinformation. Sind beide Zeitinformationen identisch oder annähernd übereinstimmend innerhalb eines vorgebbaren Toleranzbereiches, dann stellt die Bereitstellungseinheit eine kryptographisch geschützte Zeitsynchronisations-Bestätigung den Komponenten FD1, FD1 und FD4 bereit. Der zulässige Toleranzbereich kann fest vorgegeben sein oder adaptiv ermittelt werden, z.B. abhängig von Jitter der Zeitsynchronisation oder abhängig von Quality-of-Service-Parametern des zur Zeitsynchronisation oder für die Durchführung der Aufgabe (z.B. Steuerung/Regelung) verwendeten Netzwerks, z.B. Delay, Jitter, Netzwerklast. Dazu können die aktuellen oder zurückliegend ermittelte Jitter- und Quality-of-Service-Parameter ausgewertet werden. In den Schritten 3 und 4 wiederholen sich die genannten Schritte analog mit der Komponente FD2. In den Schritten 5 und 6 wiederholen sich die genannten Schritte analog mit der Komponente FD4. Danach haben alle zu der Komponentengruppe gehörenden jeweils eine Zeitsynchronisations-Bestätigung in ihren jeweiligen Empfangseinheiten erhalten. Im Beispiel in Schritt 7 lässt die Zulassungseinheit der Komponente FD1 die Ausführung seiner Aufgabe nach Empfang der kryptographisch geschützten Zeitsynchronisations-Bestätigung zu.

In der Zeitsynchronisations-Bestätigung kann eine Gültigkeitsdauer angegeben sein, auf den sich die Bestätigung bezieht. Bei Fehlen der kryptographisch geschützten Zeitsynchronisations-Bestätigung innerhalb einer vorgebbaren Zeitdauer und/oder Ablauf der Gültigkeitsdauer der kryptographisch geschützten Zeitsynchronisations-Bestätigung ist die Ausführung der Aufgabe abzulehnen. Dieses Ereignis wird typischerweise auditiert (z.B. lokal oder per syslog an einen Logging Server).

Diese Zeitsynchronisations-Bestätigungen können für die Zusicherung verwendet werden, dass die Komponenten tatsächlich hinreichend genau synchronisiert sind. Eine Zeitsynchronisations-Bestätigung kann z.B. beim Verbindungsaufbau einer Kommunikationsverbindung für die Übertragung von Echtzeit-Steuernachrichten übertragen werden, z.B. als Teil einer Authentisierung- und Schlüsselvereinbarung (TLS Handshake, IKEv2 für IPsec). Eine Komponente z.B. FD3 authentisiert sich also mit einem digitalen Zertifikat, und stellt zusätzlich eine kryptographisch geschützte Zeitsynchronisations-Bestätigung bereit.
Dadurch kann beim Aufbau einer solchen Kommunikationsverbindung geprüft werden, ob die Peer-Komponente die Voraussetzungen erfüllt, um eine zeitlich synchronisierte Verbindung zu nutzen, die insbesondere vor der Ausführung von Aufgaben z.B: Echtzeit-Operationen/-Aktionen erforderlich ist (Realtime Control). Damit kann z.B. verhindert werden, dass bei Nichtsynchronität Aufgaben ausgeführt werden, die nicht umkehrbar sind, z.B. einen physikalischen Schaden verursachen können. Ebenso können basierend auf der Genauigkeit der Synchronisation bestimmte Services bzw. Dienste in einer reduzierten Variante angeboten werden (graceful degradation). Je nach Maßzahl der gemessenen Synchronisation innerhalb eines vorgebbaren Toleranzbereichs können dann unterschiedliche Maßnahmen eingeleitet werden. Zum Beispiel:
- bis 98%: keine Maßnahme
- 93-98%: Alarmmeldung
- < 93% Anlagenteil geht in Stopp- Modus und Eingriff in das Automatisierungssystem durch einen Anlagen-Operator ist verpflichtend vorgeschrieben

Damit könnte jeder Analagenbetreiber basierend auf der Zeitsynchronisations-Bestätigung eine entsprechende Policy bzw. bestimmte Regeln umsetzen, die zu den Besonderheiten des Automatisierungssystem passt.

Es sind folgende Ausführungsformen möglich:

### 1. Zentral generierte Zeitsynchronisations-Bestätigung (ZSA) :

Eine Komponente schickt eine Anforderungsnachricht an eine Komponentengruppe von Komponenten, die eine bestimmte Aufgabe gemeinsam (synchronisiert) erfüllen sollen (z.B. die Feldgeräte zur Ansteuerung der Walzen in einem Walzwerk oder einer Druckerei). Jede der Komponenten führt darauf eine Synchronisation mit einem ausgezeichneten Server (NTP Server, PTP General Master Clock) durch und meldet die lokal synchronisierte Zeitinformation an einen zentralen Server S, z.B. über eine Anforderungsnachricht. Die Nachricht enthält die Zeitinformationen zur lokalen synchronisierten Systemzeit beispielsweise mit zumindest folgenden Informationen:
∘ Synchronization Source (Referenzquelle): NTP Server oder PTP General Master Clock, mit der sich der Client synchronisiert hat
∘ Sync-Accuracy: Genauigkeit der Zeitsynrchonisation
∘ Clock-Accuracy: Angaben über die Genauigkeit des lokalen Zeitgebers (Toleranzangaben, etc.)
∘ SynchronizedTime: Synchronisierte Zeit
∘ Last Synchronization: letzte erfolgreiche Synchronisation
∘ Synchronization Group: Liste der zu synchronisierenden Komponenten

Der Synchronisationsserver S (hier: zentrale Server S) empfängt die Anforderungsnachricht und stellt nach Erhalt aller Anforderungsnachrichten eine kryptographisch geschützte Zeitsynchronisations-Bestätigung aus, die bestätigt, dass die Komponenten der Gruppe synchronisiert sind.

In einer anderen Ausführungsform schickt der zentrale Server S nach Empfang jeder Anforderungsnachricht eine kryptographisch geschützte Zeitsynchronisations-Bestätigung an alle Komponenten der Gruppe, wobei die Liste der Komponenten ZeitInformation der erhaltenen Anforderungsnachrichten mitgeschickt wird. Dazu kann der zentrale Server S als Pub/Sub Server ausgelegt sein, der dynamische Gruppen verwaltet und über Publish-Nachrichten entsprechend die anderen Komponenten der Gruppe über den Synchronisationsstatus informiert. In einer weiteren Ausführungsform enthält die Liste mit den Komponenten- Zeitinformationen der Gruppe auch die Abweichung von der angedachten Synchronisation. Mittels einer (Group) Security Policy kann auf den Komponenten lokal entschieden werden, ob alle Komponenten der Gruppe oder nur ein Teil der Komponenten einer Gruppe mit einer bestimmten Genauigkeit synchronisiert sein müssen, um eine bestimmte Aktion auszuführen. Ist die Abweichung einer Komponente außerhalb eines vorgesehenen Toleranzbereiches, kann sich die Komponente in einer weiteren Ausführungsform anhand der empfangenen Liste der anderen Komponenten der Gruppe auf die Gruppenzeitinformation synchronisieren.

### 2. Gruppenbasierte Zeitsynchronisations-Bestätigung (GSA):

In einer weiteren Ausführungsform (ohne zentralen Server S) können die Komponenten einer Gruppe untereinander Zeitsynchronisations-Bestätigung ausstellen, die bestätigt, dass sie zu einer Nachbarkomponente synchron sind. Hierzu sind verschiedene Mechanismen einsetzbar:
∘ Es werden die Möglichkeiten von PTP genutzt, dynamisch einen Master einer Zeitdomäne aus den teilnehmenden Komponenten der Gruppe zu bestimmen. Dieser Mechanismus kann für die Ausstellung einer Zeitsynchronisationsbestätigung ebenfalls genutzt werden, indem in einem ersten Schritt in einer Gruppe dynamisch eine Masterkomponente bestimmt wird, der dann für alle Komponenten der Gruppe eine Zeitsynchronisations-Bestätigung ausstellt. Das generelle Verfahren läuft dann wie unter 1. beschrieben ab.
∘ Es können Gruppensignaturen mittels Secret Sharing/Threshold Cryptography genutzt werden, um sich gegenseitig in der Gruppe eine Zeitsynchronisations-bestätigung auszustellen und diese kryptographisch zu sichern. Dabei kann durch eine Security Policy vorgegeben sein, wie hoch der Schwellwert ist, also wie viele Komponenten einer Gruppe an einer Signatur mindestens beteiligt sein müssen.

In einer weiteren Ausführungsform werden die Gruppen dynamisch durch den jeweiligen Schritt einer Aufgabe bestimmt. Dies ermöglicht die Synchronisation der jeweils an einem Schritt der Aufgabe beteiligten Komponenten.
In einer weiteren Ausführungsform ist die Zeitsynchronisations-Bestätigung kryptographisch geschützt. Dieser Schutz kann z.B. durch eine digitale Signatur (RSA, ECDSA) realisiert werden. Bei einer gruppenbasierten Zeitsynchronisations-Bestätigung kann der kryptographische Schutz durch eine Gruppensignatur umgesetzt werden. Der kryptographische Schutz der Zeitsynchronisations-Bestätigung bringt den Vorteil mit sich, dass die Zeitsynchronisations-Bestätigung nicht (von außen) manipuliert werden kann. Eine Manipulation könnte zu Schäden im Automatisierungssystem bzw. deren Komponenten führen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Die Übertragungsvorrichtung kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zum Bestätigen einer identisch oder annähernd übereinstimmenden Zeitinformation in mehreren Komponenten (FD1, FD2, FD4) innerhalb einer vorgebbaren Komponentengruppe, deren Komponenten untereinander zeitsynchronisiert jeweils wenigstens eine Aufgabe ausführen sollen, aufweisend folgende Schritte:
- Überprüfen, ob eine angegebene Zeitinformation der Komponenten mit der von einer Referenzzeitquelle gelieferten Zeitinformation identisch oder annähernd innerhalb eines vorgebbaren Toleranzbereiches übereinstimmen,
- Bereitstellen einer kryptographisch geschützten Zeitsynchronisations-Bestätigung abhängig vom Überprüfungsergebnis, und
- Zulassen der Ausführung der wenigstens einen Aufgabe erst nach der Bereitstellung der kryptographisch geschützten Zeitsynchronisations-Bestätigung.

2. Verfahren nach dem vorhergehenden Anspruch, **dadurch gekennzeichnet, dass** die Zeitsynchronisations-Bestätigung eine Gültigkeitsdauer umfasst.

3. Verfahren nach einem der vorhergehenden Ansprüche, **dadurch gekennzeichnet, dass** bei Fehlen der kryptographisch geschützten Zeitsynchronisations-Bestätigung innerhalb einer vorgebbaren Zeitdauer und/oder Ablauf der Gültigkeitsdauer die Ausführung wenigstens einer Aufgabe abgelehnt oder nicht freigegeben wird.

4. Verfahren nach einem der vohergehenden Ansprüche, **dadurch gekennzeichnet, dass** die Zeitsynchronisations-Bestätigung als Teil einer Authentisierungs- und Schlüsselvereinbarung (TLS, IKEv2, etc.) übertragen wird.

5. Verfahren nach einem der vorhergehenden Ansprüche, **dadurch gekennzeichnet, dass** der kryptographische Schutz durch eine digitale Signatur realisiert wird.

6. Verfahren nach einem der vorhergehenden Ansprüche 1 bis 4, **dadurch gekennzeichnet, dass** der kryptographische Schutz durch eine digitale Gruppensignatur realisiert wird.

7. Verfahren nach einem der vorhergehenden Ansprüche, **dadurch gekennzeichnet, dass** die kryptographisch geschützte Zeitsynchronisations-Bestätigung durch die Referenzzeitquelle bereitgestellt wird.

8. Verfahren nach dem vorhergehenden Anspruch, **dadurch gekennzeichnet, dass** die kryptographisch geschützte Zeitsynchronisations-Bestätigung durch eine die Zeitsynchronisations-Bestätigung ausstellende Stelle bereitgestellt wird, wenn die Referenzquelle und die ausstellende Stelle getrennt voneinander angeordnet sind.

9. Verfahren nach einem der vorhergehenden Ansprüche 7 oder 8, **dadurch gekennzeichnet, dass** zumindest eine Komponente der Gruppe eine Anforderungsnachricht für die Bereitstellung einer solchen Zeitsynchronisations-Bestätigung an die Referenzzeitquelle und/oder an die die Zeitsynchronisations-Bestätigung ausstellende Stelle sendet.

10. Verfahren nach einem der vorhergehenden Ansprüche, **dadurch gekennzeichnet, dass** die Anforderungsnachricht eine Liste von Identifikationsinformationen und/oder Adressen von denjenigen Komponenten umfasst, die die Zeitsynchronisations-Bestätigung für die Ausführung der wenigenstens einen Aufgabe benötigen.

11. Vorrichtung (S, FD4)) zum Bestätigen einer identisch oder annähernd übereinstimmenden Zeitinformation in mehreren Komponenten innerhalb einer vorgebbaren Komponentengruppe, deren Komponenten untereinander zeitsynchronisiert jeweils wenigstens eine Aufgabe ausführen sollen, aufweisend:
- eine Überprüfungseinheit, die dazu eingerichtet ist, zu überprüfen, ob eine angegebene Zeitinformation der Komponenten mit der von einer Referenzzeitquelle gelieferten Zeitinformation identisch oder annähernd innerhalb eines vorgebbaren Toleranzbereiches übereinstimmen,
- ein Bereitstellungseinheit, die dazu eingerichtet ist, eine kryptographisch geschützte Zeitsynchronisations-Bestätigung abhängig vom Überprüfungsergebnis bereitzustellen.

12. Komponente (FD, FD2, FD4) innerhalb einer Komponentengruppe (FD1, FD2, FD4) geeignet zum Ausführen einer mit wenigstens einer anderen Komponente der Komponentengruppe untereinander zeitsynchronisierten Aufgabe, aufweisend:
- eine Sendeeinheit zum Senden einer Anforderungsnachricht für die Bereitstellung einer Zeitsynchronisations-Bestätigung,
- eine Empfangseinheit zum Empfang der bereitgestellten Zeitsynchronisations-Bestätigung und
- einer Zulassungseinheit, die dazu eingerichtet ist, die Ausführung der wenigstens einen Aufgabe nach Empfang der kryptographisch geschützten Zeitsynchronisations-Bestätigung zuzulassen oder bei Fehlen der kryptographisch geschützten Zeitsynchronisations-Bestätigung innerhalb einer vorgebbaren Zeitdauer und/oder Ablauf der Gültigkeitsdauer der kryptographisch geschützten Zeitsynchronisations-Bestätigung abzulehnen.

13. Komponente nach Anspruch 12, **dadurch gekennzeichnet, dass** sie dazu eingerichtet ist, eine die Zeitsynchronisations-Bestätigung ausstellende Stelle festzulegen.

14. Anordnung (AS) umfassend eine Vorrichtung nach Anspruch 11 und mindestens eine Komponente nach Anspruch 12 oder 13.

15. Computerprogrammprodukt umfassend ein nichtflüchtiges Speichermedium, auf dem ein ladbarer und ausführbarer Programmkode gespeichert ist, welches das Verfahren nach einem der vorhergehenden Verfahrensansprüchen in einer Prozessoreinheit einer Vorrichtung nach einem der vorhergehenden Vorrichtungsansprüche ausführt.
